# EUROPÄISCHE PATENTSCHRIFT

(11) **EP 0 450 116 B1**
(45) Veröffentlichungstag und Bekanntmachung des Hinweises auf die Patenterteilung: **11.01.1995**
(21) Anmeldenummer: 90106297.6
(22) Anmeldetag: 02.04.1990
(51) Int. Cl.: G06F 11/00

(54) **Automatisierungsgerät mit Test in einzelnen Schritten**
Automation apparatus with single-step test
Appareil d'automatisation avec test pas-à-pas

(43) Veröffentlichungstag der Anmeldung: 09.10.1991
(73) Patentinhaber: SIEMENS AKTIENGESELLSCHAFT, 80333 München (DE)
(72) Erfinder: Trummer, Georg, Dipl.-Ing. (FH), D-8453 Vilseck (DE)

(56) Entgegenhaltungen:
- FR-A- 2 612 661
- PATENT ABSTRACTS OF JAPAN, Band 301, Nr. 415 (P-102), 1990;& JP-A-2 012 344 (MATSUSHITA ELECTRIC) 17-01-1990
- IBM TECHNICAL DISCLOSURE BULLETIN, Band 22, Nr. 6, November 1979, Seiten 2578-2583, Armonk, New York, US; H.P. SCHLAEPPI et al.: "Debugging system compatible with optimizing compiler"

## Beschreibung

### Verfahren zum Online-Test eines Anwenderprogramms bei einem Automatisierungsgerät

Die vorliegende Erfindung betrifft ein Verfahren zum Online-Test eines Anwenderprogramms bei einem Automatisierungsgerät nach dem Oberbegriff des Anspruchs 1.

Ein derartiges Verfahren ist aus der JP-A-20 12 344 bekannt. Dort wird das Anwenderprogramm mittels eines in Hardware vorhandenen Adreßvergleichers unterbrochen. Es wird also eine Schaltung benötigt, die zusätzlich zu der für die Ausführung des Anwenderprogramms eigentlich nötigen Schaltung zusätzliche Hardwarekomponenten aufweist.

Die Aufgabe der vorliegenden Erfindung besteht darin, ein Verfahren anzugeben, das einen Test des Anwenderprogramms ohne zusätzliche Hardwarekomponenten möglich.

Die Aufgabe wird bei einem Verfahren nach dem Oberbegriff des Anspruchs 1 durch die Maßnahmen des Kennzeichens des Anspruchs 1 gelöst.

Wenn das Anwenderprogramm in dem Maschinencode über ein Programmiergerät in das Automatisierungsgerät eingegeben wird, wobei das Programmiergerät selbst die Umsetzung eines in einer anwenderfreundlichen Programmiersprache eingegebenen Anwenderprogramms in den Maschinencode vornimmt, ist die Erstellung des Anwenderprogramms für den Anwender besonders einfach.

Im folgenden wird ein Ausführungsbeispiel der Erfindung anhand einer Zeichnung näher erläutert. Es zeigen:
- FIG 1: die Hardware-Architektur eines Automatisierungsgerätes mit daran angeschlossenem Programmiergerät,
- FIG 2: die Zuordnung der Befehlsgrenzen im Maschinencode zu denen in der Maschinensprache des Prozessors mit Hilfe einer Liste,

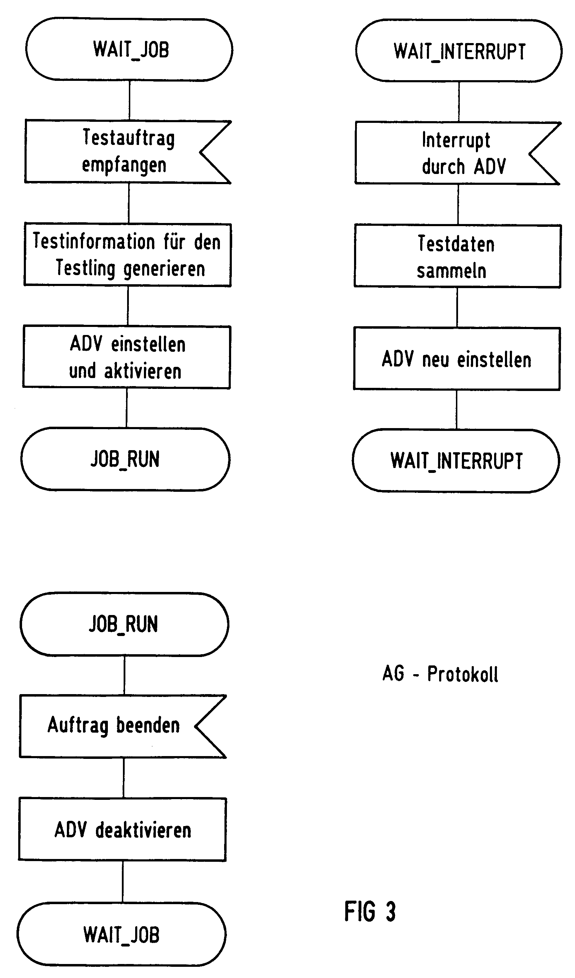

- FIG 3: den Ablaufplan für einen Test.

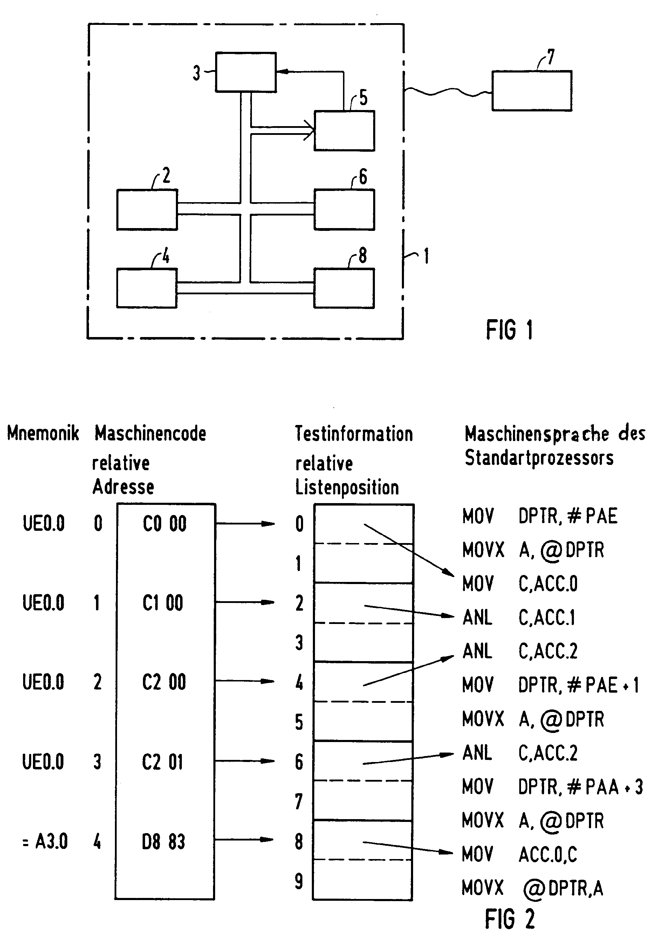

FIG 1 zeigt ein Automatisierungsgerät 1 mit einem ersten Speicher 2, einem zweiten Speicher 4, einem dritten Speicher 6, einem Adreßvergleicher 5 und einem Compiler 8. Mit dem Automatisierungsgerät 1 ist ein Programmiergerät 7 verbunden, über das kundenseitig ein Anwenderprogramm eingegeben werden kann.

Zur Eingabe dieses Anwenderprogramms stehen z. B. drei Alternativen zur Verfügung:
1. eine Anweisungsliste AWL,
2. ein Koppelplan KOP und
3. ein Funktionsplan FUP (siehe Siemens Steuerungen programmieren mit Step 5, Berger, Band 2, 1983).

Das Programmiergerät 7 generiert aus dieser Eingabeinformation einen bestimmten Maschinencode, in dem das Anwenderprogramm dem Automatisierungsgerät 1 eingegeben wird. Bei Verwendung dieses stets gleichen Maschinencodes für Automatisierungsgeräte verschiedener Typen und auch bei verschiedenen Programmiergeräten 7 sind diese untereinander kompatibel. Mit Hilfe des Compilers 8 wird das Anwenderprogramm vom Maschinencode in die Maschinensprache des Standardprozessors 3 übersetzt.

Dem Automatisierungsgerät 1 wird, z. B. über das Programmiergerät 7, vorgegeben, nach welchen ausgeführten Befehlen im Maschinencode bei der Abarbeitung des Anwenderprogramms Testdaten gesammelt werden sollen. Da aber das Anwenderprogramm in der Maschinensprache des Standardprozessors 3 abgearbeitet wird, müssen die entsprechenden Unterbrechungsstellen des Anwenderprogramms in der Maschinensprache bestimmt werden, die den gewählten Unterbrechungsstellen im Maschinencode entsprechen. Diese als Testinformation bezeichnete Zuordnung der jeweiligen Befehlsadressen wird in einer Liste gemäß FIG 2 eingetragen.

Da die Online-Tests meist nur für jeweils bestimmte Programmbausteine innerhalb des Anwenderprogramms durchgeführt werden, ist es vorteilhaft, die Testinformation jeweils auf diesen Programmbaustein zu beschränken. In diesem Fall ist der zur Abspeicherung der Testinformation erforderliche Speicherbedarf entsprechend gering. Die Testinformation ist nur temporär in einem hierfür vorgesehenen Speicher abgespeichert, denn der Speicherinhalt wird bei einem nachfolgenden Test eines anderen Programmbausteins mit dessen zugehöriger Testinformation überschrieben. Die Testinformation ist eine Liste, in der die Positionen der Listeneinträge proportional zum Maschinencode sind und die Listeneinträge auf die relevanten Stellen in der Maschinensprache zeigen.

FIG 2 zeigt, daß je Maschinenbefehl mehrere Unterbrechungsursachen denkbar sind, um die Testdaten sammeln zu können. In FIG 2 sind zwei Unterbrechungsursachen je Maschinenbefehl realisierbar. Aus der Zuordnung zwischen den Adressen im Maschinencode und den Adressen in der Maschinensprache des Prozessors, die mit der Testinformation gegeben sind, ist es möglich, Testdaten nach Ausführung bestimmter Befehle im Maschinencode zu sammeln. Dabei ist zu beachten, daß die Adressen, auf den betreffenden Programmbaustein bezogen, relative Adressen sein können, zu denen die entsprechenden absoluten Adressen im Anwenderprogramm unter Berücksichtigung des betrachteten Programmbausteins bestimmt werden. Zur Abspeicherung der Testinformation dient der zweite Speicher 4.

Um gemäß der Testinformation das Anwenderprogramm bei der Abarbeitung zur Sammlung von Testdaten zu unterbrechen, wird der Adreßvergleicher 5 eingesetzt, der die aktuelle Adresse bei der Abarbeitung des Anwenderprogramms mit der jeweiligen Adresse vergleicht, bei der eine Unterbrechung erfolgen soll. Bei Übereinstimmung beider Adressen gibt der Adreßvergleicher 5 ein Unterbrechungssignal an den Standardprozessor 3. Aufgrund dieser Unterbrechung werden die anstehenden Testdaten gesammelt.

Vorteilhafterweise wird die Maschinensprache des Prozessors, d. h. der zu testende Code, bei diesem Testverfahren überhaupt nicht geändert. Weitere Vorteile sind, daß der Test nur einen geringen zeitlichen Offset mit sich bringt und der Test im Originalcode, d. h. dem Maschinencode, durchgeführt wird. Außerdem kann das Anwenderprogramm an Stellen angehalten werden, die nicht in einem schreibbaren Speicherbereich liegen. Allerdings muß der Prozessor befehlsgranular unterbrechbar sein.

Alternativ zu dem hardwaremäßig ausgeführten Adreßvergleicher 5 ist es auch denkbar, einen speziellen Programmteil vorzusehen, der in dem dritten Speicher 6 abgelegt ist. Mit diesem als Software-Anker zu betrachtenden Programmteil wird das in der Maschinensprache stehende Anwenderprogramm, das der Unterbrechungsstelle folgt, überschrieben. Solange an der Stelle die Testdaten gesammelt werden, unterbricht dieser Programmteil die Abarbeitung des Anwenderprogramms. Zur Fortsetzung des Anwenderprogramms wird dieser Programmteil wieder mit den ursprünglich an dieser Stelle gestandenen Befehlen des Anwenderprogramms überschrieben. Diese Lösung weist den Vorteil auf, daß der Standardprozessor unabhängig von seiner Prozessorarchitektur stets angehalten werden kann. Dies ist bei der zuvor beschriebenen Hardware-Lösung mit dem Adreßvergleicher 5 nicht immer definiert möglich. Außerdem besteht auch hier der Vorteil eines nur geringen zeitlichen Offsets durch den Test. Nachteilig ist jedoch bei der Ausführung mit dem Software-Anker, daß das Anwenderprogramm nur dort angehalten werden kann, wo der Speicher beschreibbar ist. Weiterhin wird beim Test nicht der Originalcode abgearbeitet.

Bild 3 zeigt den Ablauf des Online-Tests in einem Ablaufplan (AG-Protokoll). Der Online-Test wird dadurch eingeleitet, daß über das Programmiergerät 7 ein Testauftrag an die Zentraleinheit des Prozessors 3 mit Informationen über den zu testenden Baustein und die relativen Adressen der Einzelschrittbearbeitung, bezogen auf den Bausteinbeginn, gegeben werden. In der Zentraleinheit ist nun über die Testinformationsliste die absolute Adresse der Unterbrechung in der Maschinensprache abfragbar. Die absolute Adresse der Unterbrechungsstellen wird in einen hardwaremäßig vorhandenen Adreßvergleicher 5 geladen, der den Adressbus bezüglich der zu den Befehlen gehörenden Opcode-Fetch-Zugriffe des Prozessors 3 auf die angegebenen Adresse überwacht. Erkennt der Adreßvergleicher 5 diesen Zugriff, meldet er dies dem Prozessor durch ein Unterbrechungssignal (siehe FIG 2). Der Prozessor 3, der selbst den Zugriff durchgeführt hat, wird nach Bearbeitung des zuvor geholten Befehlscodes durch den Adreßvergleicher 5 unterbrochen.

In der Interrupt-Service-Routine werden die Testdaten gesammelt. Danach wird anhand des Testauftrags und der Testinformation entschieden, ob weitere Unterbrechungen erforderlich sind. Falls weitere Unterbrechungen notwendig sind, wird in der Interrupt-Service-Routine der Adreßvergleicher 5 neu geladen, ansonsten bleibt er unangetastet.

Ist die Interrupt-Service-Routine beendet, so wird die Programmbearbeitung an der Unterbrechungsstelle fortgesetzt.

Dieser Mechanismus wiederholt sich bis zur Deaktivierung des Adreßvergleichers 5. Der Online-Test nach dem zuvor beschriebenen Verfahren ist nur durchzuführen, wenn zwei Anforderungen erfüllt sind:
1. Der Prozessor muß befehlsgranular unterbrechbar sein und
2. die betreffende Unterbrechung darf nicht maskiert sein, bzw. muß im Verhältnis zur Abarbeitung des Programms in der Maschinensprache die richtige Prioritätslage haben.

Die Forderung nach der Nichtmaskierung bedeutet, daß der Prozessor imstande sein muß, den Interrupt des Adreßvergleichers 5 zu bemerken. Hierzu darf der Interruptkanal im Prozessor nicht gesperrt sein.

Im Prozessor haben Interrupts bestimmte Prioritäten. Die Interrupt-Service-Routine hat immer die gleiche Priorität wie der Interrupt selbst. Interrupt-Service-Routinen mit niederer Priorität können durch höherpriore Interrupts mit den daran hängenden Interrupt-Service-Routinen unterbrochen werden. Niederpriore Interrupts können höherpriore Interrupt-Service-Routinen nicht unterbrechen. Beim vorliegenden Test ist die Programmbearbeitung niederpriorer als der Interrupt durch den Adreßvergleicher 5. Folglich können Testdaten gesammelt werden, da der Prozessor den Interrupt vom Adreßvergleicher 5 durchläßt, solange das niederpriore Programm läuft.

## Patentansprüche

1. Verfahren zum Online-Test eines Anwenderprogramms bei einem Automatisierungsgerät, das in einem ersten Speicher in einem Maschinencode gespeichert und von einem Standardprozessor (3) in einer Maschinensprache abgearbeitet wird, wobei zur Vorbereitung des Online-Tests
- zunächst dem Automatisierungsgerät (1) die Adressen der Befehle im zu testenden Bereich des Anwenderprogramms im Maschinencode eingegeben werden, nach deren Ausführung in der Maschinensprache Testdaten gesammelt werden,
- sodann der Maschinencode mittels eines Compilers (8) in die Maschinensprache des Standardprozessors (3) übersetzt und in einem Programmspeicher abgespeichert wird,
- während des Übersetzens für den zu testenden Bereich des Anwenderprogramms die Zuordnung zwischen den Adressen jedes Befehls im Maschinencode zu den Adressen der entsprechenden Befehle in der Maschinensprache des Standardprozessors (3) bestimmt wird und
- schließlich als Testinformation die Zuordnung in einem zweiten Speicher (4) abgelegt wird,
**dadurch gekennzeichnet**, daß zur Durchführung des Online-Tests
- ein Unterbrechungsprogramm an der vorgewählten Adresse in den Programmspeicher kopiert wird,
- die bei jeder Unterbrechung anstehenden Testdaten gesammelt werden und
- nach der Sammlung von Testdaten das ursprüngliche Anwenderprogramm in den überschriebenen Speicherbereich zurückkopiert wird.

2. Verfahren nach Anspruch 1, **dadurch** **gekennzeichnet**, daß das Anwenderprogramm in dem Maschinencode über ein Programmiergerät (7) in das Automatisierungsgerät (1) eingegeben wird, wobei das Programmiergerät (7) selbst die Umsetzung eines in einer anwenderfreundlichen Programmiersprache eingegebenen Anwenderprogramms in den Maschinencode vornimmt.

## Claims

1. Method for the on-line testing of a user program in a programmable controller, which program is stored in a first memory in a machine code and is processed by a standard processor (3) in a machine language, wherein for the preparation of the on-line test
- in the first instance the addresses of the commands in the area of the user program to be tested are input into the programmable controller (1) in the machine code, after the execution of them in the machine language test data is collected,
- then the machine code is translated into the machine language of the standard processor (3) by means of a compiler (8) and stored in a program memory,
- during the translation for the area of the user program to be tested, the coordination between the addresses of each command in the machine code with the addresses of the corresponding commands in the machine language of the standard processor (3) is determined, and,
- finally, as test information the coordination is filed in a second memory (4),
characterised in that for the purpose of carrying out the on-line test
- an interrupt program is copied into the program memory at the preselected address,
- the test data which occurs in the case of each interruption is collected and
- after the collection of test data the original user program is copied back into the overwritten memory area.

2. Method according to claim 1, characterised in that the user program is input into the programmable controller (1) in the machine code by way of a programming unit (7), with the programming unit (7) itself effecting the conversion of a user program, which is input in a user-friendly programming language, into the machine code.

## Revendications

1. Procédé de test en direct d'un programme d'utilisateur pour un appareil d'automatisation, ce programme étant mémorisé dans un code machine dans une première mémoire et étant exécuté dans un langage machine par un processeur standard (3), et selon lequel pour la préparation du test en direct
- on introduit d'abord les adresses des instructions dans l'appareil d'automatisation (1) dans la zone à tester du programme d'utilisateur en code machine et on collecte des données de test en langage machine après l'exécution de ces instructions,
- ensuite on traduit le code machine au moyen d'un compilateur (8) en le langage machine du processeur standard (3),
- on détermine, pendant la traduction pour la zone à tester du programme d'utilisateur, l'affectation entre les adresses de chaque instruction en code machine aux adresses des instructions correspondantes en langage machine du processeur (3) standard, et
- enfin on mémorise l'affectation, en tant qu'information de test, dans une seconde mémoire (4),
caractérisé par le fait que pour l'exécution du test en direct
- on copie un programme d'interruption à l'adresse présélectionnée dans la mémoire de programme,
- on collecte les données de test, qui sont présentes lors de chaque interruption, et
- après la collecte de données de test, on recopie le programme d'utilisateur initial dans la zone de mémoire réenregistrée.

2. Procédé suivant la revendication 1, caractérisé par le fait que l'on introduit le programme d'utilisateur, au moyen d'un appareil de programmation (7), en code machine, dans l'appareil d'automatisation (1), l'appareil de programmation (7) exécutant lui-même la conversion d'un programme d'utilisateur, introduit dans un langage de programmation approprié pour l'utilisateur, en le code machine.
